# EUROPEAN PATENT SPECIFICATION

(11) **EP 3 045 753 B1**
(45) Date of publication and mention of the grant of the patent: **07.11.2018**
(21) Application number: 14844535.6
(22) Date of filing: 16.09.2014
(51) Int. Cl.: F16C 35/073, F16C 19/06, F16C 25/08, F16H 48/42

(54) **BEARING STRUCTURE**
TRAGSTRUKTUR
STRUCTURE DE PALIER

(30) Priority: 13.09.2013 JP 2013190464
(43) Date of publication of application: 20.07.2016
(73) Proprietor: HI-LEX Corporation, Takarazuka-shi, Hyogo 665-0845 (JP)
(72) Inventor: INAGAKI,Hiroyuki, Takarazuka-shi Hyogo 665-0845 (JP); OSAFUNE,Hitoshi, Takarazuka-shi Hyogo 665-0845 (JP); KARAKI,Masakazu, Takarazuka-shi Hyogo 665-0845 (JP)
(74) Representative: Epping - Hermann - Fischer
(86) International application number: PCT/JP2014/074362
(87) International publication number: WO 2015/037735

(56) References cited:
- EP-A2- 0 418 526
- EP-A2- 1 013 896
- DE-A1-102010 062 793
- JP-A- S4 898 243
- JP-A- S60 208 618
- JP-A- 2004 203 212
- JP-A- 2008 032 042
- JP-U- 3 038 627
- US-A- 1 524 626
- US-A- 4 727 970
- US-A- 5 161 903

## Description

### Technical Field

The present invention relates to a bearing structure.

### Background Art

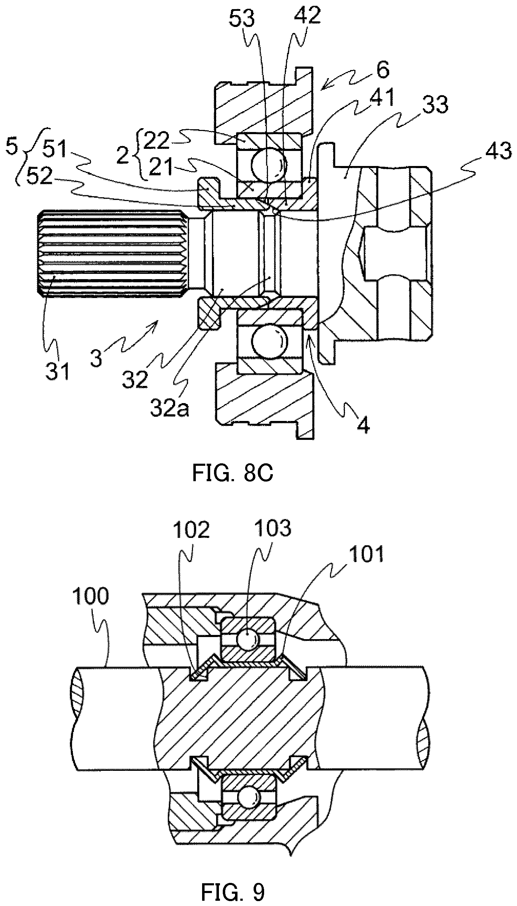

As a structure to couple a rolling bearing and a shaft, a structure described in Patent Literature (hereinafter, referred to as "PTL") 1 is disclosed. The structure disclosed in PTL 1 is a structure in which pinion shaft 100 is provided with circumferential groove 102 with which stopper tube 101 is engaged and rolling bearing 103 is held from both sides in an axis direction by stopper tube 101 engaged with an engagement section as illustrated in FIG. 9.

In this structure, stopper tube 101 is fitted onto pinion shaft 100 from one side, one end of stopper tube 101 is plastically deformed, afterward rolling bearing 103 is inserted into stopper tube 101, and the other end of stopper tube 101 is plastically deformed, and, as illustrated in FIG.9, rolling bearing 103 is held axially.

PTL 2 discloses a bearing structure according to the preamble of claim 1 for a turbine engine where a bearing system has an inner race and an outer race disposed co-axially and engaged with each other via balls, and pieces are fixed to each other by welding or the like to form a base member enclosing a shaft. In the bearing structure disclosed in PTL2, a front piece and a rear piece forms a bearing-engaging member holding the inner race, and an inner surface portion of the bearing-engaging member is provided with an annular projection extending radially inwardly and accommodated within a recess, thereby the bearing is supported radially and its axial movement is restricted.

PTL 3 to PTL7 each discloses a bearing structure similar to that disclosed in PTL2 in terms of that a fixing member disposed between a bearing and a base member is engaged with a recess provided to the base member.

### Citation List

### Patent Literature

PTL 1
   Japanese Patent Application Laid-Open No. 2005-69447
PTL 2
   EP 1013896 A2
PTL 3
   US 1524626 A
PTL 4
   US 5 1161 903 A
PTL 5
   EP 0 418 526 A2
PTL 6
   JP 2008 032042 A
PTL 7
   US 4 727 970 A

### Summary of Invention

### Technical Problem

The structure indicated in PTL 1, however, has a problem in that although rolling bearing 103 can be fixed axially, unwanted looseness, which is depending on a dimensional tolerance or the like of members to be used, such as pinion shaft 100, stopper tube 101, rolling bearing 103, and the like, occurs between these members in the radial direction of rolling bearing 103.

In view of the problem mentioned above, an object of the present invention is to provide a bearing structure which regulates the movement of the rolling bearing to both sides in the axis direction of the rolling bearing and which also eliminates unwanted looseness in the radial direction of the rolling bearing.

### Solution to Problem

A bearing structure of the present invention is provided according to claim 1 and includes: a rolling bearing; a base member to which the rolling bearing is attached and which includes an engagement section; a first fixing member including a first regulation section which regulates movement of the rolling bearing to one side of an axis direction of the rolling bearing, the first fixing member being immovable in the axis direction with respect to the base member; and a second fixing member including a second regulation section which regulates movement of the rolling bearing to another side of the axis direction, an engagement-target section which is engaged with the engagement section, and a support section which radially supports the rolling bearing.

The engagement section is disposed at an inner side of an inner ring of the rolling bearing, and the first fixing member and the second fixing member are favorably disposed between the inner ring and the engagement section.

The engagement section includes an annular groove formed at an outer periphery of the base member, and the engagement-target section is favorably engaged with the groove.

The first fixing member and/or the second fixing member is press-fitted from the both sides in the axis direction of the rolling bearing, thereby deforming in the annular groove to engage with the annular groove.

### Advantageous Effects of Invention

According to the present invention, it is made possible to regulate the movement of the rolling bearing to both sides in the axis direction of the rolling bearing and also to eliminate unwanted looseness in the radial direction of the rolling bearing.

### Brief Description of Drawings

FIG.1 is a cross-sectional view of an embodiment in which a bearing structure of the present invention is applied to a linear actuating device;
FIG. 2 is a cross-sectional view illustrating the bearing structure of the present invention;
FIG. 3 is a cross-sectional view illustrating a bearing case by which an outer ring of a rolling bearing of the bearing structure of the present invention is fixed;
FIG. 4 is a partial cross-sectional view illustrating a form of a base member of the bearing structure of the present invention;
FIG. 5 is a cross-sectional view illustrating a first fixing member of the bearing structure of the present invention;
FIG. 6 is a cross-sectional view illustrating a second fixing member of the bearing structure of the present invention;
FIG. 7A is a cross-sectional view illustrating another aspect of the first fixing member of the bearing structure of the present invention;
FIG. 7B is a cross-sectional view illustrating another aspect of the second fixing member of the bearing structure of the present invention;
FIG. 8A is a diagram illustrating an exemplary assembly method for the bearing structure of the present invention;
FIG. 8B is another diagram illustrating the exemplary assembly method for the bearing structure of the present invention;
FIG. 8C is yet another diagram illustrating the exemplary assembly method for the bearing structure of the present invention; and
FIG. 9 is a partial cross-sectional view illustrating a bearing structure of the related art.

### Description of Embodiments

Hereinafter, a bearing structure of the present invention will be described in detail with reference to the accompanying drawings.

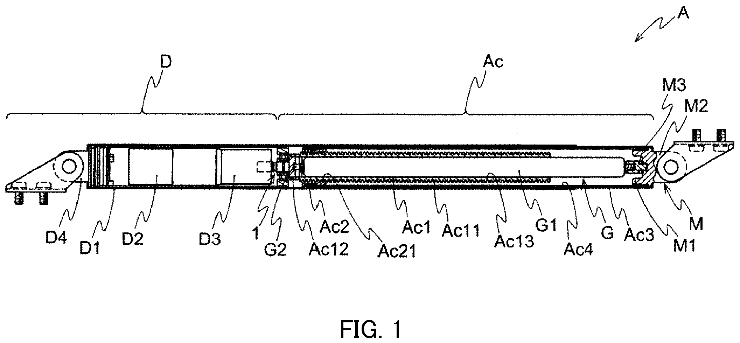

FIG. 1 illustrates an example in which bearing structure 1 of the present invention is applied to linear actuating device A for use in a driving device for a door that is rotated around a hinge to be opened and closed, such as a power lift gate for a rear door of a vehicle. Note that, bearing structure 1 of the present invention is not limited to the application to linear actuating device A to be described in this embodiment and is also applicable to various structures having a rolling bearing within the scope of the object of the present invention.

As illustrated in FIG. 1, linear actuating device A includes: power section D; actuator Ac including sleeve screw Ac1 and nut member Ac2; gas spring G; and attachment member M attached to a target object such as a rear door of a vehicle. Power section D and actuator Ac are coupled by bearing structure 1. Linear actuating device A extends and retracts linearly when actuator Ac is driven by the power from power section D.

Although no details are particularly given in FIG. 1, power section D includes: housing D1; motor D2 fixed within housing D1; gearbox D3 attached to an output shaft of motor D2; and turn support section D4 disposed at one end side of housing D1 (end side opposite to the end side where bearing structure 1 is coupled).

Housing D1 is a cylindrical member and serves as an exterior for power section D, and in this embodiment, housing D1 also serves as an exterior for linear actuating device A. Housing D1 protects motor D2, gearbox D3 and bearing structure 1 coupled to power section D, which are disposed inside housing D1. Housing D1 serves as a structural member that supports load applied axially when linear actuating device A operates. For this reason, housing D1 is composed of a cylinder capable of obtaining strength (e.g., made of iron or metal such as aluminum alloy, or high-strength engineering plastic).

Motor D2 is disposed within housing D1 to be coaxial with actuator Ac to be described hereinafter, and in this embodiment, motor D2 is disposed to be coaxial with housing D1, that is, is disposed such that the output shaft (not illustrated) of motor D2 rotates around the central axis of housing D1. Note that, for motor D2, a wide range of motors including a direct-current (DC) motor, alternating-current (AC) motor, and the like is adoptable. In addition, it is also possible to determine motor D2 on the basis of the installation location of linear actuating device A and/or an operation condition such as the size or weight of the operation target. For example, when linear actuating device A is used for opening and closing a door of an automobile, a DC motor is favorable because an automobile is provided with a DC power supply.

In order to reduce an output loss from the output shaft, motor D2 is held (fixed) neither to rotate with respect to housing D1 nor to move axially. Note that, motor D2 may be firmly fixed to housing D1 to be immovable, or a key or spline or the like may be used to suppress rotation around the axis while regulating the movement in the axis direction by forming a step or the like in housing D1. A wide range of methods for suppressing axial rotation of motor D2 with respect to housing D1 and axial movement of motor D2 is adoptable in attachment of motor D2 to housing D1.

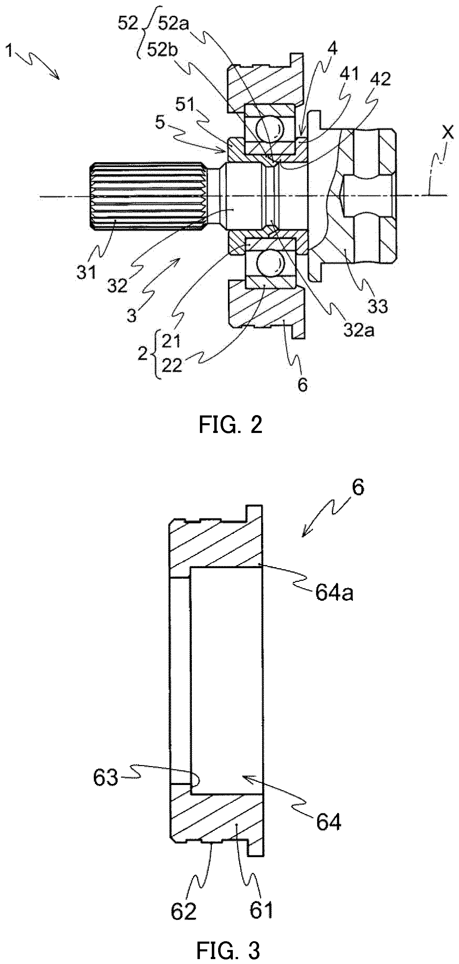

As with motor D2, gearbox D3 is held by housing D1. Gearbox D3 includes a plurality of gear wheels within gearbox D3, and one end portion of gearbox D3 serves as an input side (left side in FIG. 1) while the other end portion thereof serves as an output side (right side in FIG. 1). The output shaft of motor D2 is connected to the input side of gearbox D3, and gear section 31 (see FIG. 2) of bearing structure 1 to be described hereinafter is connected to the output side of gearbox D3. As illustrated in FIG. 1, gearbox D3 connects the output shaft of motor D2 and gear section 31 together such that their axial centers coincide with each other. Gearbox D3 reduces (decelerates) the speed of rotation input from the input side, while increasing (amplifying) the torque and outputs the torque from the output side.

In linear actuating device A, when transmitting the output (rotation) of the output shaft of motor D2 to gear section 31, gearbox D3 reduces the rotation speed while increasing the torque to transmit the output. In addition, because of the presence of gearbox D3, a motor which generates small torque (small-sized motor in general) is adoptable as motor D2 of linear actuating device A. However, when motor D2 is a motor capable of generating sufficient torque with low speed rotation, gearbox D3 may be omitted, and the output shaft and gear section 31 may be connected directly, or the output shaft may also serve as gear section 31. Moreover, gearbox D3 brings about effects as a buffer member which suppresses an axial force input from gear section 31 from acting on motor D2.

Turn support section D4 is attached to the end portion of housing D1. Turn support section D4 is configured to be capable of supporting linear actuating device A turnably with respect to an attachment target. In this embodiment, turn support section D4 is a plate-shaped member projecting in the axis direction of housing D1 and includes a through hole formed at the center portion thereof. Power section D, i.e. the entirety of linear actuating device A, is attached to a support object (e.g., body of an automobile) by inserting a pin or screw through the through hole so as to be turnable around the through hole. Note that, a wide range of members such as a ball socket joint, clevis, and pin joint is adoptable as turn support section D4.

Actuator Ac includes guide case Ac3, sleeve screw Ac1, nut member Ac2, and link member Ac4 within housing D1. Guide case Ac3 is housed within housing D1 slidably with respect to housing D1. Sleeve screw Ac1 is disposed so as not to be in contact with guide case Ac3. Nut member Ac2 moves on a groove of spiral groove Ac11 formed on the outer periphery of sleeve screw Ac1. Link member Ac4 having a cylindrical shape is disposed inside guide case Ac3 and connected to nut member Ac2.

Sleeve screw Ac1 is a cylindrical member and has a spiral groove (male thread) Ac 11 formed on the outer periphery of the cylinder. Sleeve screw Ac1 includes: coupling section Ac12 to be coupled with bearing structure 1 in order to transmit the torque from power section D to sleeve screw Ac1 via bearing structure 1; and gas spring attachment section Ac13 which is formed inside the cylindrical shape and to which gas spring G (gas cylinder GI) is attached. Note that, sleeve screw Ac1 may be directly provided at the outer periphery of gas spring G.

Spiral groove Ac11 described here is a male thread. Spiral groove Ac11 is screwed to spiral groove Ac21 of nut member Ac2. Coupling section Ac12 is coupled to sleeve screw connection section 33 of base member 3 (see FIG. 2) to be described hereinafter, so as to be rotatable in accordance with rotation of sleeve screw connection section 33, thus transmitting the torque of motor D2 to sleeve screw Ac1. Note that, coupling section Ac12 and sleeve screw connection section 33 may be coupled together by a known fixedly attaching means such as a screw, or a variety of configurations capable of surely transmitting the rotation of sleeve screw connection section 33 to sleeve screw Ac1 is adoptable, including a configuration in which a non-circular recess hole is formed in spline or coupling section Ac12, and the leading end of sleeve screw connection section 33 is formed in a shape identical to the non-circular recess hole and inserted into the non-circular recess hole, and a configuration using a key or key groove. Coupling section Ac12 may be provided with a reinforcement plate for receiving the axial force of base member 3. As described above, since coupling section Ac12 and sleeve screw connection section 33 are coupled together, the rotation of base member 3 is transmitted to coupling section Ac12, thus causing sleeve screw Ac1 to rotate. Details of this movement will be described hereinafter.

At least gas cylinder G1 of gas spring G is attached inside gas spring attachment section Ac13. Gas spring attachment section Ac13 supports gas cylinder G1 so that gas cylinder G1 is coaxial with sleeve screw Ac1. At this time, gas spring attachment section Ac13 may tightly hold gas cylinder G1 to keep gas cylinder G1 immovable with respect to sleeve screw Ac1 or may support gas cylinder G1 in a rotatable manner. Gas spring attachment section Ac13 may support gas cylinder G1 in any way as long as the sliding direction of a piston rod in gas cylinder G1 is identical to the axis direction of sleeve screw Ac1, and it is more favorable when the axis of the piston rod overlaps the axis of sleeve screw Ac1.

Nut member Ac2 is a member including spiral groove Ac21 with a female thread at the inner side of nut member Ac2. Spiral groove Ac21 with a female thread is engaged with spiral groove Ac11 with a male thread of sleeve screw Ac1. Note that, in linear actuating device A, sleeve screw Ac1 and nut member Ac2 are provided with a male thread and a female thread, respectively, but linear actuating device A is not limited to this configuration, and a wide range of configurations is adoptable, each capable of converting the rotation of sleeve screw Ac1 into the force to axially move nut member Ac2 fitted onto sleeve screw Ac1 as in the configuration of a ball screw structure, for example. Nut member Ac2 moves within a range in which spiral groove Ac11 of sleeve screw Ac1 is formed.

Link member Ac4 is a cylindrical member and is attached inside guide case Ac3. Although illustration is omitted, link member Ac4 is provided with a rotation prevention member that prevents link member Ac4 from rotating with respect to sleeve screw Ac1. Nut member Ac2 is connected to one end portion of link member Ac4 so as to prevent link member Ac4 and nut member Ac2 from moving relatively. In this embodiment, nut member Ac2 is connected to the end portion (end portion on the side of power section D) of link member Ac4.

Since the rotation of link member Ac4 with respect to sleeve screw Ac1 is regulated, the rotation of nut member Ac2 fixed to link member Ac4 with respect to sleeve screw Ac1 is also regulated. In this state, when sleeve screw Ac1 rotates with the power from power section D, sleeve screw Ac1 rotates with respect to nut member Ac2. Thus, the operation of spiral groove Ac11 and spiral groove Ac12 causes nut member Ac2 and link member Ac4 to which nut member Ac2 is fixed to move axially along sleeve screw Ac1.

Gas spring G is a member that provides a biasing force outward by the pressure of internally sealed gas. Gas spring G includes: gas cylinder G1; a piston head (not illustrated) disposed slidably within gas cylinder G1; and a piston rod having one end attached to the piston head and the other end protruding from gas cylinder G1. The configuration of gas spring G is well known, so that the detailed description of the configuration is omitted herein.

Gas cylinder G1 is a cylindrical member in which a gas is encapsulated and which has one closed end and the other end having a hole through which the piston rod penetrates. Gas cylinder G1 pushes (or pulls) the piston head by the pressure of the gas inside gas cylinder G1 and the axial force acts on the piston rod. The leading end of the piston rod that protrudes from gas cylinder G1 is rotatably connected to attachment member M.

Note that, linear actuating device A has a structure in which gas spring G adds the biasing force outward by gas cylinder G1 and the piston rod (generates a repulsive force) even when linear actuating device A extends the most (i.e., nut member Ac2 reaches the leading end (right side end portion in FIG. 1) of sleeve screw Ac1). Note that, actuator Ac of gas spring type using gas spring G is indicated in this embodiment, but an actuator of spring type (not illustrated) may be used instead of actuator Ac of gas spring type. In the case of the actuator of spring type, instead of gas cylinder G1 disposed at the center of housing D1, a spring can be disposed along the inner periphery of housing D1 of the actuator Ac portion in FIG. 1 to assist the motion of the actuator by the biasing force of the spring.

Attachment member M is a member attached to an operation target (e.g., rear door in the case of an automobile) to be operated by linear actuating device A. Attachment member M includes: fitting section M1 which fits to the leading end of link member Ac4; attachment section M2 attached to the operation target; and bearing M3 which rotatably supports the leading end of the piston rod.

Fitting section M1 is a member which fits to the leading end of link member Ac4 and is fixed thereto. Thus, attachment member M operates in synchronization with link member Ac4. In linear actuating device A, attachment member M1 is press-fitted to link member Ac4 to be fixed, but linear actuating device A is not limited to this configuration. A variety of methods capable of securely fixing link member Ac4 and fitting section M1 is adoptable.

Attachment section M2 includes an engagement hole and allows a fastener such as a screw, pin, or rivet to be inserted through the hole to be turnably attached to the operation target. As a result, attachment member M is attached to the operation target turnably around the fastener.

Next, bearing structure 1 of the present invention will be described. FIG. 2 is a partial cross-sectional view of bearing structure 1 excluding portions other than bearing structure 1 from linear actuating device A illustrated in FIG. 1. As illustrated in FIG. 2, bearing structure 1 of the present invention includes: rolling bearing 2; base member 3 to which rolling bearing 2 is attached and which includes engagement section 32a; first fixing member 4 including first regulation section 41 which regulates movement of rolling bearing 2 to one side of an X-axis direction of rolling bearing 2 and being made immovable in the X-axis direction with respect to base member 3; and second fixing member 5 including second regulation section 51 which regulates movement of rolling bearing 2 to the other side of the X-axis direction of rolling bearing 2, engagement-target section 52a which is engaged with engagement section 32a, and support section 52b which radially supports rolling bearing 2.

In this embodiment, rolling bearing 2 is illustrated as a radial bearing having inner ring 21 and outer ring 22 of rolling bearing 2 (hereinafter, simply referred to as "inner ring 21" and "outer ring 22"). A known rolling bearing may be adopted as rolling bearing 2, and rolling bearing 2 is not particularly limited to the illustrated rolling bearing.

In this embodiment, base member 3 is illustrated as a power transmission member which is indirectly attached to rolling bearing 2 at an inner side of inner ring 21 via first fixing member 4 and second fixing member 5 and which transmits the power from power section D to actuator Ac. In this embodiment, first fixing member 4 and second fixing member 5 are not provided at an outer side of outer ring 22, and outer ring 22 is held by bearing case 6.

As illustrated in FIGS. 2 and 3, bearing case 6 includes main body 61 having a substantially cylindrical shape and housing rolling bearing 2 and is fixed to the inner side of housing D1 by fixing section 62 formed on an outer peripheral surface of main body 61 (see FIG. 1). Bearing case 6 includes step section 63 engageable with one end surface of outer ring 22 as illustrated in FIG. 3. Bearing case 6 is provided with open housing section 64 for housing rolling bearing 2 at an inner side of main body 61 (see FIG. 3), and rim portion 64a of open housing section 64 in the end surface of main body 61, which is opposite to the end side where step section 63 is formed, is swaged to hold outer ring 22 from the both sides in the X-axis direction, thereby regulating movement in the X-axis direction between bearing case 6 and outer ring 22 (see FIG. 2). Note that, in this specification, the "base member" may be any member as long as rolling bearing 2 is attachable via first fixing member 4 and second fixing member 5, and may be provided at an inner side of inner ring 21 as in this embodiment or may be provided at an outer side of outer ring 22 of rolling bearing 2 unlike this embodiment. Furthermore, although base member 3 is configured so as to be rotatable at the inner side of inner ring 21, the member at the inner side of inner ring 21 may be configured not to be rotatable while the member provided at the outer side of outer ring 22 may be configured to be rotatable. Likewise, when a base member is provided at an outer side of outer ring 22, the base member at the outer side of outer ring 22 may be configured to be rotatable while the member provided at an inner side of inner ring 21 may be configured to be not rotatable or vice versa. Moreover, the shape of base member 3 is not limited to the illustrated cylindrical shape, and any shape is adoptable as long as inner ring 21 or outer ring 22 is attachable.

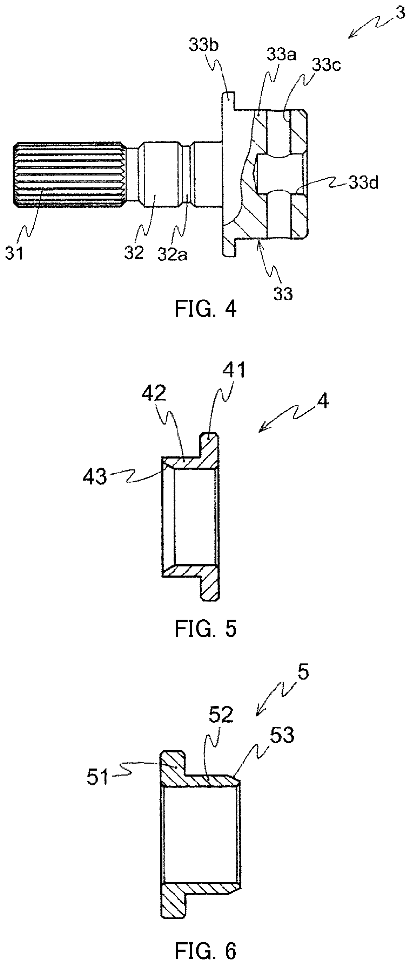

Base member 3 of this embodiment is illustrated as a power transmission member as described above and includes: gear section 31 connected to the output side of gearbox D3 of power section D; shaft section 32 rotatably supported at an inner side of inner ring 21; and sleeve screw connection section 33 connected to sleeve screw Ac1 as illustrated in FIGS. 2 and 4. Shaft section 32 includes engagement section 32a formed therein as illustrated in FIGS. 2 and 4, but engagement section 32a will be described, hereinafter.

Gear section 31 has gear teeth engageable with a gear (not illustrated) within gearbox D3 on the outer periphery of gear section 31 as illustrated in FIGS. 2 and 4. Gear section 31 and shaft section 32 are formed coaxially and shaft section 32 rotates when gear section 31 rotates. The end portion of shaft section 32 on the side of actuator Ac (right side in FIGS. 2 and 4) is provided with sleeve screw connection section 33, and sleeve screw Ac1 is connected to sleeve screw connection section 33. In this embodiment, as illustrated in FIG. 4, sleeve screw connection section 33 includes: body section 33a which has a cylindrical shape and onto which sleeve screw Ac1 is fitted; and flange section 33b protruding outward from the outer periphery of body section 33a at the end portion of body section 33a on the side of shaft section 32. When fitted onto body section 33a, sleeve screw Ac1 comes into contact with flange section 33b and is fixed by fixing a known fixing means (not illustrated) such as a screw placed into fixing hole 33c formed toward the center portion from the outer periphery of body section 33a to connect sleeve screw Ac1 and sleeve screw connection section 33 together. In addition, fitting hole 33d into which attachment shaft G2 (see FIG. 1) of gas spring G is fitted is formed in the end portion of body section 33a on the side of actuator Ac along the X-axis. As described above, power section D and actuator Ac are coupled together by bearing structure 1, and when power section D is driven, bearing structure 1 transmits the power from power section D to actuator Ac, thus causing linear actuating device A to extend and retract.

Rolling bearing 2 is attached to support a rotation shaft when base member 3 serving as the power transmission member rotates. Engagement section 32a is formed in base member 3 in order to attach rolling bearing 2 to base member 3 and is engaged with engagement-target section 52a of second fixing member 5. In this embodiment, engagement section 32a is formed in shaft section 32 of base member 3, and as illustrated in FIG. 2, engagement section 32a is disposed at an inner side of inner ring 21 of rolling bearing 2, and first fixing member 4 and second fixing member 5 are disposed between inner ring 21 and shaft section 32. The shape of engagement section 32a is not limited to a particular shape. In this embodiment, the shape of engagement section 32a is an annular groove formed at the outer periphery of base member 3. Engagement-target section 52a of second fixing member 5 is engaged with the annular groove. This engagement of engagement-target section 52a with the annular groove makes it difficult for second fixing member 5 to be removed from between rolling bearing 2 and base member 3. Note that, first fixing member 4 and second fixing member 5 may be disposed at an outer side of outer ring 22. In this case, first fixing member 4 and second fixing member 5 are disposed between the outer ring 22 and an engagement section of a base member provided at an outer side of outer ring 22 (e.g., bearing case or housing that houses rolling bearing 2). Moreover, engagement section 32a is illustrated as an annular groove formed at the outer periphery of base member 3 (shaft section 32) in this embodiment, but engagement section 32a is not necessarily formed in an annular groove as long as engagement section 32a is engageable with engagement-target section 52a to bring about the effects to be described hereinafter. In addition, engagement section 32a is formed in a recess shape while engagement-target section 52a is formed to be engaged with engagement section 32a formed in the recess shape in this embodiment, but engagement section 32a may be formed in a protruding shape and engagement-target section 52a may be formed to be engaged with the engagement section formed in the protruding shape. As to the regulation of movement of rolling bearing 2 by first regulation section 41, as long as first regulation section 41 regulates movement of rolling bearing 2, first regulation section 41 may regulate movement of rolling bearing 2 directly or indirectly, and it is not limited to a particular way.

First fixing member 4 regulates movement of rolling bearing 2 to one side of the X-axis direction in bearing structure 1. In this embodiment, first fixing member 4 disposed between base member 3 and rolling bearing 2 includes first regulation section 41 which regulates movement of rolling bearing 2 to the one side of the X-axis direction. In this embodiment, one end surface of first regulation section 41 in the X-axis direction comes into contact with flange section 33b of sleeve screw connection section 33, thereby regulating movement of first fixing member 4 to the one side. In addition, second fixing member 5 to be described hereinafter regulates movement of first fixing member 4 to the other side. Even when rolling bearing 2 attempts to move to one side of the X-axis direction, e.g., to the right side in FIG. 2 during attachment of rolling bearing 2 to base member 3, first regulation section 41 comes into contact with inner ring 21 or outer ring 22 of rolling bearing 2 (inner ring 21 in this embodiment). In this case, since first fixing member 4 is immovable in the X-axis direction, first fixing member 4 regulates the movement of rolling bearing 2 to the one side of the X-axis direction (right side in FIG. 2). In this embodiment, as illustrated in FIGS. 2 and 5, first fixing member 4 includes: interposition section 42 of a cylindrical shape having an inner diameter capable of being fitted onto the outside of the outer periphery of shaft section 32 and interposed between shaft section 32 and inner ring 21; and first regulation section 41 protruding outward in the diameter direction from the outer periphery of one end portion (right side in FIG. 2) of the axis direction of interposition section 42 to form a flange shape capable of being in contact with one end surface (right side in FIG. 2) of inner ring 21 in the X-axis direction. Note that, as long as first regulation section 41 can regulate the movement of rolling bearing 2 to one side of the X-axis direction, first regulation section 41 may have a shape other than the flange shape. First fixing member 4 may be integrally formed with a portion having a function other than first regulation section 41 or interposition section 42, such as sleeve screw connection section 33. When first fixing member 4 has first regulation section 41 which regulates the movement of rolling bearing 2 to one side of the X-axis direction, first fixing member 4 does not have to be necessarily interposed between shaft section 32 of base member 3 and inner ring 21. For example, another member that comes in contact with the end surface of inner ring 21 or outer ring 22 of rolling bearing 2 (e.g., sleeve screw connection section 33) may be used as the first fixing member to regulate the movement of rolling bearing 2 to one side of the X-axis direction without providing first fixing member 4 of the embodiment illustrated in FIG. 5. Note that, first fixing member 4 according to the present invention is not limited to a member interposed between base member 3 and rolling bearing 2, and a member that is apart from the connection position of rolling bearing 2 with respect to base member 3 and that is immovable with respect to base member 3, such as sleeve screw connection section 33 may be used to directly or indirectly regulate the movement to one side (right side in FIG. 2) in the X-axis direction. In this embodiment, first regulation section 41 is provided at first fixing member 4 that is immovable with respect to base member 3, as a flange shaped protrusion protruding around the entire circumference of the shaft in the direction perpendicular to the X-axis direction of rolling bearing 2. First fixing member 4 may have interposition section 42 in order to prevent unwanted looseness of rolling bearing 2 in the perpendicular direction with respect to the X-axis direction of rolling bearing 2 other than first regulation section 41 which regulates the movement of rolling bearing 2. In this embodiment, interposition section 42 has a function to regulate movement of first fixing member 4 to the other side in the X-axis direction as well as a function to regulate movement of engagement-target section 52a of second fixing member 5 from the engagement position with respect to engagement section 32a. Interposition section 42 has a cylindrical shape that covers base member 3 over the entire circumference of base member 3. First fixing member 4 includes first regulation section 41 at the end portion of interposition section 42 at the one side in the X-axis direction and has a shape with substantially an L-shaped cross section.

Second fixing member 5 is a member which regulates movement of rolling bearing 2 to the other side in the X-axis direction, and second fixing member 5 regulates movement of rolling bearing 2 to the both sides in the X-axis direction together with first fixing member 4. As illustrated in FIG. 2, second fixing member 5 includes: second regulation section 51 which regulates the movement of rolling bearing 2 to the other side in the X-axis direction; engagement-target section 52a which is engaged with engagement section 32a; and support section 52b which radially supports rolling bearing 2. In second fixing member 5 of the present invention, engagement-target section 52 of second fixing member 5 is engaged with engagement section 32a of base member 3, thereby regulating movement of second fixing member 5 with respect to base member 3 to the other side in the X-axis direction. Second regulation section 51 of second fixing member 5 regulates the movement of rolling bearing 2 to the other side in the X-axis direction, which is a direction opposite to the direction regulated by first regulation section 41 of first fixing member 4, thus regulating the movement of rolling bearing 2 to the both sides in the X-axis direction together with first regulation section 41 of first fixing member 4. Accordingly, first fixing member 4 and second fixing member 5 hold rolling bearing 2 therebetween from both sides in the X-axis direction, and engagement-target section 52 of second fixing member 5 is engaged with engagement section 32a of base member 3 to prevent second fixing member 5 from moving with respect to base member 3. Thus, base member 3 and rolling bearing 2 are fixed via first fixing member 4 and second fixing member 5 so as to be relatively immovable in the X-axis direction. Rolling bearing 2 has a structure to be held between first regulation section 41 and second regulation section 51 in the X-axis direction, so that the movement of rolling bearing 2 in the X-axis direction is regulated. Regarding the regulation of movement of rolling bearing 2 by second regulation section 51, as long as second regulation section 51 regulates the movement of rolling bearing 2, it is not limited to a particular way. Thus, second regulation section 51 may directly or indirectly regulate the movement of rolling bearing 2. In this embodiment, second fixing member 5 which is made immovable with respect to base member 3 includes second regulation section 51 having a flange shape protruding in the perpendicular direction with respect to the X-axis direction of rolling bearing 2, and the surface of inner ring 21 of rolling bearing 2 at the other side (left side in FIG. 2) in the X-axis direction comes in contact with second regulation section 51, thereby, making rolling bearing 2 immovable to the other side (left side in FIG. 2) in the X-axis direction. Second fixing member 5 has support section 52b which radially supports rolling bearing 2. In this embodiment, support section 52b has a cylindrical shape and is interposed between rolling bearing 2 and base member 3 to radially support rolling bearing 2. Second regulation section 51 may have a shape with substantially an L-shaped cross section as a protrusion of the flange protruding around the entire circumference of the shaft in the perpendicular direction with respect to the X-axis direction of rolling bearing 2, and a rectangular portion may have a shape extending radially outward from the X-axis.

More specifically, with reference to FIG. 2, even when rolling bearing 2 attempts to move to the other side in the X-axis direction, e.g., the left side in FIG. 2 during attachment of rolling bearing 2 to base member 3, second regulation section 51 comes into contact with inner ring 21 or outer ring 22 of rolling bearing 2 (comes into contact with inner ring 21 in this embodiment), thereby preventing rolling bearing 2 from moving to the other side (left side in FIG. 2) in the X-axis direction. More specifically, first regulation section 41 of first fixing member 4 and second regulation section 51 of second fixing member 5 hold rolling bearing 2 in between, thereby, regulating the movement of rolling bearing 2 to the one side and the other side in the X-axis direction. In this embodiment, as illustrated in FIGS. 2 and 6, second fixing member 5 has an inner diameter capable of being fitted onto the outside of the outer periphery of shaft section 32 and includes: second interposition section 52 which has a cylindrical shape and which is interposed between shaft section 32 and inner ring 21; and second regulation section 51 of a flange shape which protrudes outward in the diameter direction from the outer periphery of the end portion of second interposition section 52 on the other side (left side in FIG. 2) in the axis direction and which is capable of being in contact with the end surface of inner ring 21 on the other side (left side in FIG. 2) in the X-axis direction. Second interposition section 52 is composed of engagement-target section 52a and support section 52b. Although details will be given hereinafter, in this embodiment, when second interposition section 52 is disposed between engagement section 32a and inner ring 21, engagement-target section 52a illustrated in FIG. 2, which is provided at the end portion of support section 52b on the one side (right side in FIG. 2) in the X-axis direction, is engaged with engagement section 32a of base member 3. Support section 52b is a portion of second interposition section 52 that radially supports the inner ring by coming into contact with inner ring 21 when second fixing member 5 is fittingly inserted into a gap between shaft section 32 and inner ring 21 and engagement-target section 52a is engaged with engagement section 32a. Note that, in this embodiment, the end portion of second interposition section 52 on one side in the X-axis direction may be used as engagement-target section 52a that deforms to be engaged with engagement section 32a, or engagement-target section 52a may be previously formed in a shape engageable with engagement section 32a (e.g., engagement-target section formed by bending in a direction perpendicular to second interposition section 52). In this embodiment, although second regulation section 51 previously formed in a flange shape is illustrated, second fixing member 5 may be formed in the following manner as second regulation portion 51: a cylindrical member having engagement-target section 52a is engaged with engagement section 32a first; rolling bearing 2 is placed onto second fixing member 5 in which second regulation section 51 having a flange shape is not formed; and the end portion of second fixing member 5 on a side opposite to the engagement-target section 52a is bent so as to be in contact with the end surface of inner ring 21 of rolling bearing 2. Thus, second fixing member 5 formed in this manner prevents rolling bearing 2 from moving to the other side in the X-axis direction.

In bearing structure 1 of the embodiment, as illustrated in FIG. 2, inner ring 21 is held between first regulation section 41 of first fixing member 4 and second regulation section 51 of second fixing member 5 from the both sides in the X-axis direction, and engagement-target section 52a of second fixing member 5 is engaged with engagement section 32a of base member 3 (shaft section 32), thereby making it possible to regulate movement in the X-axis direction among first fixing member 4, second fixing member 5, rolling bearing 2 and base member 3 (shaft section 32). Moreover, since support section 52b of second fixing member 5 is interposed between rolling bearing 2 and base member 3 (shaft section 32) and radially supports rolling bearing 2, unwanted looseness in the radial direction between inner ring 21 of rolling bearing 2 and base member 3 (shaft section 32) can be eliminated. Thus, according to the present invention, the engagement of engagement-target section 52a of second fixing member 5 with engagement section 32a of base member 3 regulates the movement of rolling bearing 2 to the both sides in the X-axis direction and makes it possible to eliminate unwanted looseness in the radial direction of rolling bearing 2.

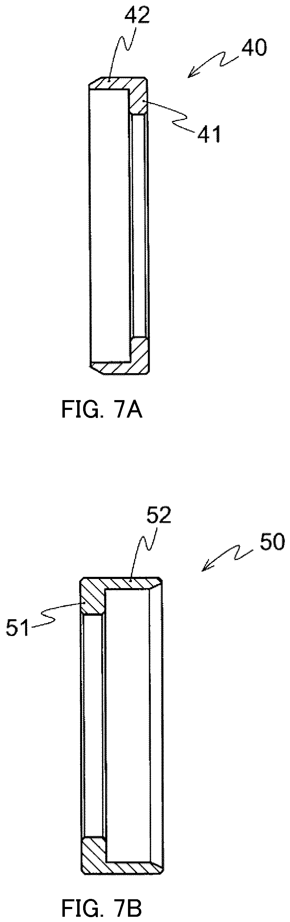

Note that, although first fixing member 4 and second fixing member 5 are interposed between inner ring 21 and shaft section 32 of base member 3 provided at an inner side of inner ring 21 in the embodiment illustrated in FIG. 2, similar operational effects can be obtained with a configuration in which first fixing member 40 and second fixing member 50 illustrated in FIGS. 7A and 7B are interposed between outer ring 22 of rolling bearing 2 and a base member having an engagement section provided at an outer side of outer ring 22. In first and second fixing members 40 and 50 for outer ring 22, which are illustrated in FIGS. 7A and 7B, first and second regulation sections 41 and 51 protrude inward from first and second interposition sections 42 and 52 so to be in contact with the end surface of outer ring 22. Note that, first and second fixing members 40 and 50 for fixing outer ring 22 basically have the functions identical to those of first and second fixing members 4 and 5 for fixing inner ring 21, so that the same reference numerals are used for these members and the detailed description of the members will be omitted herein.

In this embodiment, first fixing member 4 and/or second fixing member 5 is configured to deform on the annular groove to engage with the groove when being press-fitted from the both sides in the X-axis direction of rolling bearing 2. In this case, one or both of first fixing member 4 and second fixing member 5 are composed of a plastically deformable material and press-fitted between base member 3 and rolling bearing 2 to make one or both of first fixing member 4 and second fixing member 5 close to each other in the X-axis direction, thereby making it possible to engage engagement-target section 52a of second fixing member 5 with engagement section 32a of base member 3. Press-fitting of first and second fixing members 4 and 5 may be performed by directly pressing each of first and second fixing members 4 and 5 or indirectly pressing first and second fixing member 4 and 5 via a different member such as a fixture. When first fixing member 4 and/or second fixing member 5 is press-fitted from one or both sides in the X-axis direction of rolling bearing 2, engagement-target section 52a deforms in the annular groove and is engaged with engagement section 32a. This deformation brings first fixing member 4 and second fixing member 5 in contact with each other, so that engagement-target section 52a comes into contact with first fixing member 4, thus, making it possible to regulate movement of second fixing member 5 to the one side of the X-axis direction. During this engagement, second interposition section 52 of second fixing member 5 can surely eliminate unwanted looseness in the radial direction of rolling bearing 2 because not only engagement-target section 52a is engaged with engagement section 32a, but also the deformation brings the inner periphery of inner ring 21 and support section 52b in contact with each other or causes support section 52b to press against the inner periphery of inner ring 21. In addition, when engagement-target section 52a of second fixing member 5 is engaged with the annular groove, since engagement section 32a is the annular groove, engagement-target section 52a is almost proportionally engaged in the circumferential direction of shaft section 32. Thus, unwanted looseness between rolling bearing 2 and base member 3 can be proportionally eliminated, and the coupling strength between rolling bearing 2 and base member 3 can be increased.

When first fixing member 4 and/or second fixing member 5 is deformable as described above, it is also possible to form first taper surface 43 at the leading end portion of interposition section 42 of first fixing member 4 and second taper surface 53 at the leading end portion of second interposition section 52 of second fixing member 5 in order to make first fixing member 4 and/or second fixing member 5 easily deformable when press-fitted, as illustrated in FIGS. 5 and 6. In this manner, press-fitting first fixing member 4 and/or second fixing member 5 from one or both sides in the X-axis direction of rolling bearing 2 causes first and second taper surfaces 43 and 53 to press against each other, so that engagement-target section 52a is engaged with engagement section 32a. Accordingly, when first fixing member 4 and/or second fixing member 5 is press-fitted into a gap between rolling bearing 2 and base member 3, engagement-target section 52a and engagement section 32a can be easily engaged with each other.

Next, a description will be given of assembly of bearing structure 1 of the embodiment. Note that, the assembly to be described hereinafter is only an example, and the assembly is not limited to the method to be described below.

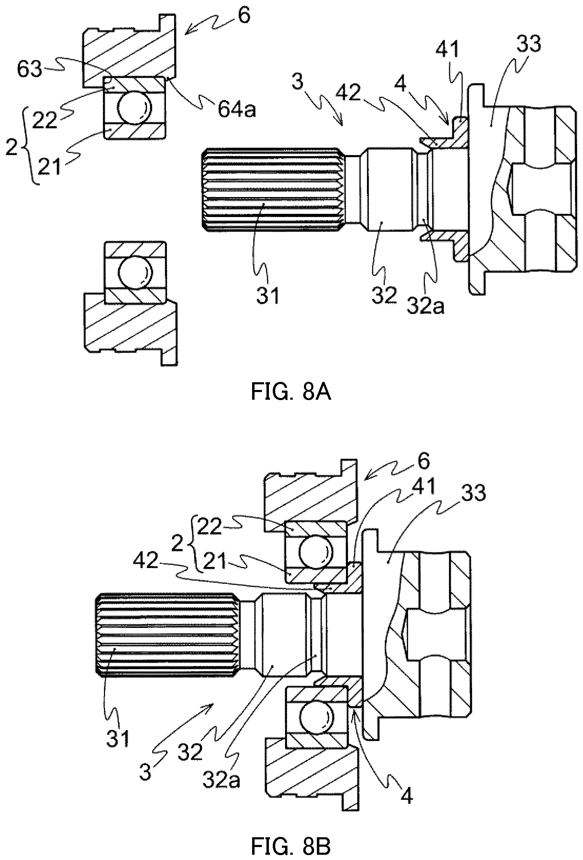

First, rolling bearing 2 is put into open housing section 64 of bearing case 6 as illustrated in FIG. 3, and outer ring 22 is held from the both sides in the X-axis direction by swaging rim portion 64a of open housing section 64 of bearing case 6 to be deformed inward in the state that the end surface of outer ring 22 is in contact with step section 63 of bearing case 6. Moreover, as illustrated in FIG. 8A, first fixing member 4 is fitted onto shaft section 32 of base member 3 from the direction of gear section 31 such that first regulation section 41 comes into contact with sleeve screw connection section 33. After first fixing member 4 is fitted onto shaft section 32, rolling bearing 2 and bearing case 6 which have been integrated into a single body are inserted from the direction of gear section 3 of base member 3, and inner ring 21 is fitted onto interposition section 42 of first fixing member 4 (see FIG. 8B). In order to facilitate fitting of rolling bearing 2 onto interposition section 42 of first fixing member 4 during this assembly, the outer diameter of interposition section 42 may be made smaller than the inner diameter of inner ring 21 of rolling bearing 2. In the state illustrated in FIG. 8B, interposition section 42 of first fixing member 4 has an axial length shorter than the axial length of inner ring 21 of rolling bearing 2 and has a leading end positioned at substantially the center portion of inner ring 21 in the X-axis direction. In addition, engagement section 32a of shaft section 32 is positioned at substantially the center portion of the inner ring 21 in the X-axis direction.

The leading end of second interposition section 52 of second fixing member 5 is inserted into a gap between inner ring 21 and shaft section 32 from the state illustrated in FIG. 8B to the state illustrated in FIG. 8C. In this embodiment, first and second taper surfaces 43 and 53 are formed at the leading ends of interposition section 42 and second interposition section 52 of first and second fixing members 4 and 5, respectively. When second fixing member 5 is press-fitted after first and second taper surfaces 43 and 53 of first and second fixing members 4 and 5 come into contact with each other, engagement-target section 52a at the leading end portion of second interposition section 52 of second fixing member 5 deforms toward the inner side of engagement section 32a of shaft section 32 because of first taper surface 43 of first fixing member 4. When press-fitting of second fixing member 5 is continued in the state described above in a case where second fixing member 5 is formed using an easily plastically deformable material such as aluminum, engagement-target section 52a plastically deforms and progresses until engaged with engagement section 32a and becomes the state illustrated in FIG. 2. When the sum of the volume of the portion of first fixing member 4 placed at the inner side of inner ring 21, and the volume of the portion of second fixing member 5 placed at the inner side of inner ring 21 is greater than the volume of the gap between the inner side of inner ring 21 and shaft section 32 (including the space in engagement section 32a), by press-fitting of second fixing member 5, engagement-target section 52a and engagement section 32a engage with each other in the state illustrated in FIG. 2, and the inner periphery of inner ring 21 of rolling bearing 2 and support section 52b of second fixing member 5 are in contact with each other without any gap. Thus, shaft section 32 of base member 3 can be held without unwanted looseness. Moreover, when first and second taper surfaces 43 and 53 are formed as in the case of this embodiment, first taper surface 43 of first fixing member 4 receives power toward to the inner periphery of inner ring 21 from second taper surface 53 during press-fitting, so that first fixing member 4 also comes in contact with the inner periphery of inner ring 21 of rolling bearing 2 without any gap. Accordingly, shaft section 32 of base member 3 and inner ring 21 of rolling bearing 2 are more surely fixed radially in a state not causing unwanted looseness.

Furthermore, for use in linear actuating device A provided within an elongated space such as a power lift gate as in this embodiment or a small actuator or an actuator to be disposed in a small space, more members may be disposed around rolling bearing 2 within an elongated space or narrow space. However, as described above, since rolling bearing 2 and base member 3 can be assembled together with a simple structure in the case of the present invention, there is no interference with another member around rolling bearing 2.

### Reference Signs List

1 Bearing structure
2 Rolling bearing
21 Inner ring
22 Outer ring
3 Base member
31 Gear section
32 Shaft section
32a Engagement section
33 Sleeve screw connection section
33a Body section
33b Flange section
33c Fixing hole
33d Fitting hole
4 First fixing member
41 First regulation section
42 Interposition section
43 First taper surface
5 Second fixing member
51 Second regulation section
52 Second interposition section
52a Engagement-target section
52b Support section
53 Second taper surface
6 Bearing case
61 Main body
62 Fixing section
63 Step section
64 Open housing section
64a Rim portion of open housing section
A Linear actuating device
Ac Actuator
Ac1 Sleeve screw
Ac11 Spiral groove
Ac12 Coupling section
Ac13 Gas spring attachment section
Ac2 Nut member
Ac21 Spiral groove
Ac3 Guide case
Ac4 Link member
D Power section
D1 Housing
D2 Motor
D3 Gearbox
D4 Turn support section
G Gas spring
G1 Gas cylinder
G2 Attachment shaft of gas spring
M Attachment member
M1 Fitting section
M2 Attachment section
M3 Bearing
X Axis

## Claims

1. A bearing structure (1) comprising:
a rolling bearing (2);
a base member (3) to which the rolling bearing is attached and which includes an engagement section (32a);
a first fixing member (4) including a first regulation section (41) which regulates movement of the rolling bearing to one side in an axis direction of the rolling bearing, the first fixing member being immovable in the axis direction with respect to the base member; and
a second fixing member (5) including:
a second regulation section (51) which regulates movement of the rolling bearing to another side in the axis direction,
an engagement-target section which is engaged with the engagement section, and
a support section (52b) which radially supports the rolling bearing,
wherein the engagement section includes an annular groove disposed at an inner side of an inner ring of the rolling bearing and formed at an outer periphery of the base member,
wherein the first fixing member and the second fixing member are disposed between the inner ring and the engagement section, and
wherein the engagement-target section is engaged with the annular groove,
**characterized in that**:
the first fixing member and/or the second fixing member is press-fitted from the both sides in the axis direction of the rolling bearing, thereby deforming in the annular groove to engage with the annular groove.

## Patentansprüche

1. Lageraufbau (1), umfassend:
ein Wälzlager (2);
ein Grundelement (3), an dem das Wälzlager angebracht ist, und das einen Koppelabschnitt (32a) enthält;
ein erstes Befestigungselement (4), enthaltend einen ersten Regulierungsabschnitt (41), der eine Bewegung des Wälzlagers zu einer Seite in einer Achsrichtung des Wälzlagers reguliert, wobei das erste Befestigungselement in der Achsrichtung bezüglich des Grundelements unbeweglich ist; und
ein zweites Befestigungselement (5), enthaltend:
einen zweiten Regulierungsabschnitt (51), der eine Bewegung des Wälzlagers zu einer anderen Seite in der Achsrichtung reguliert,
einen Ankoppelabschnitt, der mit dem Koppelabschnitt gekoppelt ist, und
einen Trägerabschnitt (52b), der das Wälzlager radial trägt,
wobei der Koppelabschnitt eine ringförmige Nut enthält, die an einer Innenseite eines Innenrings des Wälzlagers angeordnet ist und an einem Außenumfang des Grundelements ausgebildet ist,
wobei das erste Befestigungselement und das zweite Befestigungselement zwischen dem Innenring und dem Koppelabschnitt angeordnet sind, und
wobei der Ankoppelabschnitt mit der ringförmigen Nut gekoppelt ist,
**dadurch gekennzeichnet, dass**:
das erste Befestigungselement und/oder das zweite Befestigungselement von den beiden Seiten in der Achsrichtung des Wälzlagers aufgepresst werden, wodurch sie sich in der ringförmigen Nut verformen, um sich mit der ringförmigen Nut zu koppeln.

## Revendications

1. Structure de support (1) comportant :
un roulement (2) ;
un élément de base (3) auquel est fixé le roulement et qui comporte une section d'engagement (32a) ;
un premier élément de fixation (4) comportant une première section de régulation (41) qui régule le mouvement du roulement vers un côté dans une direction d'axe du roulement, le premier élément de fixation étant immuable dans la direction d'axe par rapport à l'élément de base ; et
et un second élément de fixation (5) comportant :
une seconde section de régulation (51) qui régule le mouvement du roulement vers un autre côté dans la direction d'axe,
une section d'engagement-cible qui est engagée avec la section d'engagement, et
une section de support (52b) qui supporte radialement le roulement,
dans laquelle la section d'engagement comporte une rainure annulaire disposée sur un côté intérieur d'une bague intérieure du roulement et formée sur une périphérie extérieure de l'élément de base,
dans laquelle le premier élément de fixation et le second élément de fixation sont disposés entre la bague intérieure et la section d'engagement, et
dans laquelle la section d'engagement-cible est en prise avec la rainure annulaire,
**caractérisée en ce que** :
le premier élément de fixation et/ou le second élément de fixation sont/est emmanché(s) à force à partir des deux côtés dans la direction de l'axe du roulement, se déformant de ce fait dans la rainure annulaire pour entrer en prise avec la rainure annulaire.
